Europäisches Patentamt

European Patent Office

Office européen des brevets

(11) Publication number: 0 385 352
A2

## (12) EUROPEAN PATENT APPLICATION

(21) Application number: 90103705.1

(22) Date of filing: 26.02.90

(51) Int. Cl.5 H02M 7/5387

(30) Priority: 03.03.89 IT 336789

(43) Date of publication of application:
05.09.90 Bulletin 90/36

(84) Designated Contracting States:
DE ES FR GB SE

(71) Applicant: INDEL B S.R.L.
Località Ca' Baldone
I-61019 S. Agata Feltria (Pesaro)(IT)

(72) Inventor: Giorgetti, Pierluigi
Via Pagetti 7
I-61019 S. Agata Feltria (Pesaro)(IT)

(74) Representative: Modiano, Guido et al
MODIANO, JOSIF, PISANTY & STAUB
Modiano & Associati Via Meravigli, 16
I-20123 Milano(IT)

(54) Three-phase generator with directcurrent supply.

(57) The three-phase generator with direct-current supply comprises a generator (5) of pulses which have a frequency equal to that of the three-phase voltage to be obtained. A phase shifter (4) is connected to the pulse generator and has a plurality of outputs (30-35) at which cyclically a signal is present which is phase shifted with respect to the preceding one for each input pulse. These signals control, through driver stages (2,3), a final power stage (1) composed of controllable components (20-25). The final stage has, for each phase, a pair of components connected in series between the terminals of the direct current supply. The driver stages operate so as to connect the intermediate points of each pair of components to the supply terminals according to a cyclic behavior having the desired frequency.

FIG.1

## THREE-PHASE GENERATOR WITH DIRECT-CURRENT SUPPLY

The present invention relates to a three-phase generator with direct-current supply.

A generator of this kind is described for example in the US patent No. 4,320,449. However, the circuit is very complicated and entails excessive production costs.

The technical aim of the invention is to provide a generator of the described type which is structurally simpler than those currently commercially available and is therefore economically advantageous for an equal performance.

Within the scope of this aim, an object of the invention is to provide a three-phase generator which is reliable in operation and is particularly suitable for driving refrigeration units powered by a battery, as required in boats, campers and the like.

This aim and this object are achieved by a three-phase generator with direct-current supply as defined in claim 1.

The advantages and characteristics of the present invention will become apparent from the following detailed description of a preferred embodiment, illustrated only by way of non-limitative example in the accompanying drawings, wherein:

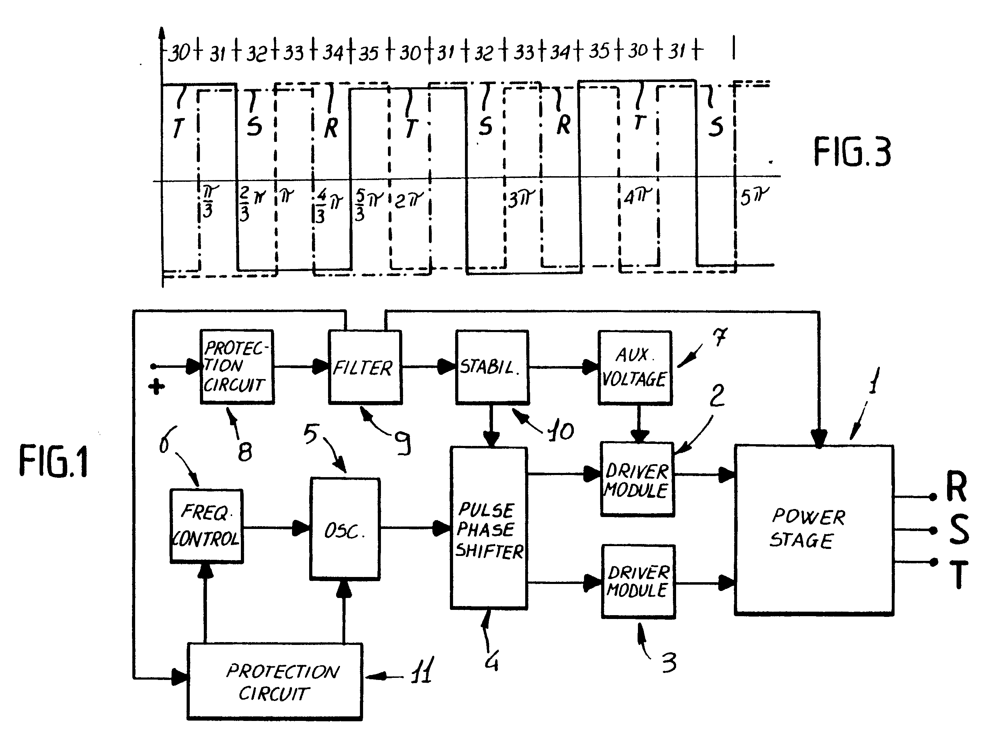

figure 1 is an electric block diagram of the generator;

figure 2 is a detail view of the electric diagram of the individual stages;

figure 3 shows the plot of the three-phase voltage obtained with the generator according to the invention.

With reference to the above figures, the three-phase generator comprises a final power stage 1 feeding the three-phase voltage at the three outputs R, S, T.

According to the operating concept of the generator, the three-phase voltage is available to the user in the form of a square wave as illustrated in figure 3.

In order to obtain a voltage capable of generating a rotating field in a three-phase motor, the final stage 1 comprises components, specified hereafter, which when controlled in a cyclic manner generate voltages with cyclically variable amplitude and polarity at the outputs R, S and T.

In order to obtain a $120°$ phase shift of the voltages at the outputs R, S and T, the final stage is controlled by two driver modules 2 and 3 which cause the output voltage to switch to positive and to negative, respectively. The driver modules 2 and 3 are in turn controlled by a control stage 4 which is defined hereafter as pulse phase shifter.

Said phase shifter is indeed capable of generating, at its outputs, pulse signals which are mutually phase shifted and which, when fed to the modules 2 and 3, control the power components of the final stage 1 so that the desired three-phase voltage is achieved at the outputs R, S and T.

The pulses which are phase shifted in the phase shifter 4 are generated in a square-wave pulse generator 5. In the illustrated example it is possible to vary the frequency of the signal generated by generator 5 at the beginning of each cycle in order to optimize performance during the transient user connection step, in particular during the startup of a user constituted by an electric motor. The frequency variation is obtained by means of a circuit 6 which is capable of temporarily modifying the operating frequency of the generator 5.

The reference numeral 7 indicates a stage which provides an auxiliary voltage necessary to drive the final stage 1 according to the power components used therefor, whereas 8, 9 and 10 indicate respectively a protection circuit, a high-frequency filter and a voltage stabilizer.

The protection circuit 8 is used to protect the generator from accidental polarity reversals, from overheating and anomalous consumptions due to environmental temperatures in excess of the allowed values.

Finally, 11 indicates a circuit adapted to protect the generator from startup instability phenomena due to supply battery voltage drops below a preset threshold value.

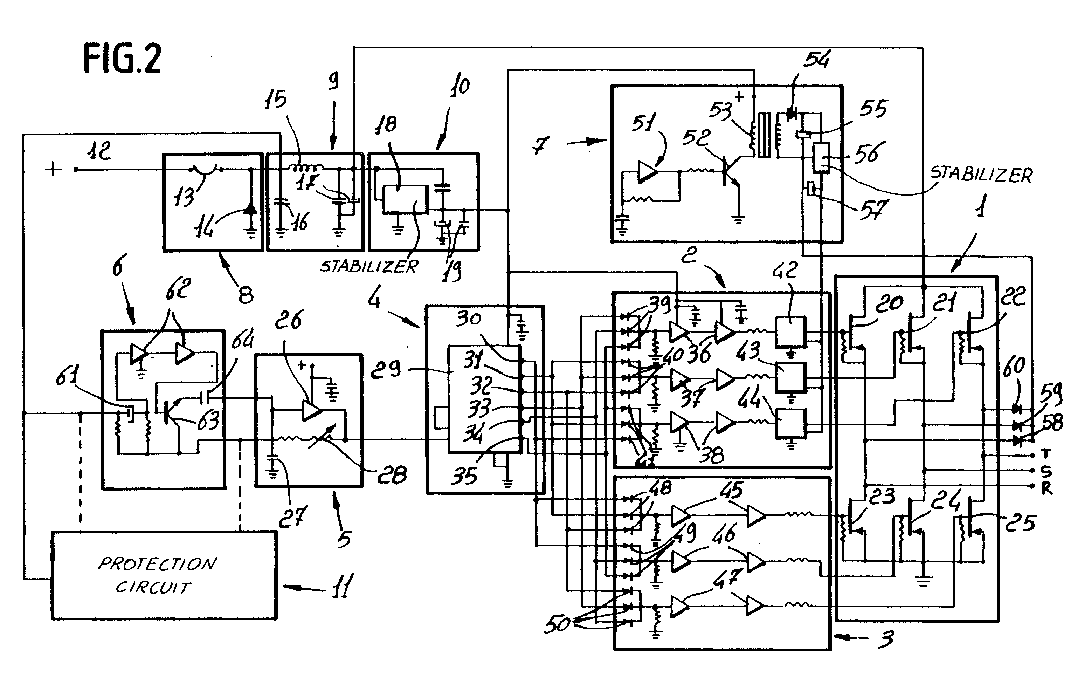

More in detail (see Fig. 2), the positive voltage of the supply battery or accumulator is connected to the input 12 of the protection circuit 8, which comprises an amperometric thermal protection device 13 with automatic reactivation, of the kind commercially known by the name KLIXON. A power diode 14 is coupled to said thermal protection device and short-circuits the current in case of accidental polarity reversal.

The noise which is generated by the switchings of the components of the final power stage 1 and might interfere with radio and TV receivers is blocked in the filter 9 (which comprises, in a known manner, an inductor 15 and capacitors 16 and 17).

The voltage at the output of the filter 9 is stabilized by an integrated circuit 18, for example the 7808 component, to the output whereof capacitors 19 are connected in order to block high-frequency and ripple residues.

The stabilized voltage is used to supply the phase shifter 4, whereas the positive voltage of the battery is fed directly to the final power stage 1 which comprises six controllable components 20, 21, 22, 23, 24 and 25 constituted by so-called HEXFETs (e.g. IRFZ30) installed in tandem configuration.

More precisely, the HEXFETs 20-22 are connected in series to the respective HEXFETs 23-25, so that each pair of HEXFETs 20, 23; 21, 24; and 22, 25 is connected between the battery and the ground.

The intermediate taps between the pairs of series-connected HEXFETs constitute the outputs R, S and T of the three-phase voltage.

The pulse generator 5 is in practice an oscillator composed of an inverter 26, a capacitor 27 and an adjustable resistor 28 for adjusting the operating frequency. The generator 5 provides a square-wave pulse voltage with a frequency of 50 Hz which is fed to the phase shifter 4.

Said phase shifter 4 is in practice constituted by an integrated circuit 29 (e.g. the 4017 component) provided with six outputs 30, 31, 32, 33, 34, 35 which has the peculiarity of dividing the input pulses so as to feed the outputs 30-35 in sequence with signals which are phase shifted by 60°. Each output 30-35 is connected to both driving modules 2, 3 according to a schema which determines the cyclic variation of the polarities of the voltage at the output points R, S and T.

The module 2 is composed of three pairs of inverters which are indicated by 36, 37 and 38 and are grouped in an integrated circuit (e.g. the 40106 component). The inverters of each pair are mutually in cascade and are connected through a network of diodes to the outputs of the phase shifter 4. More in detail, the inverters 36 are connected, through the three-diode set 39 defining an OR circuit, to the outputs 35, 34, 33 of the phase shifter; the inverters 37 are connected, through the three-diode set 40, to the outputs 33, 32 and 31, and the inverters 38 are connected, through the three-diode set 41, to the outputs 31, 30 and 35.

The outputs of the inverters 36, 37 and 38 are connected to the gates of the HEXFETs 20, 21 and 22 by means of respective optical coupling devices indicated by 42, 43 and 44.

Similarly, the control module 3 is composed of three pairs of inverters, indicated by 45, 46 and 47, which are grouped into an integrated circuit of the 40106 type. The inverters of each pair are mutually in cascade and are connected, at their inputs, through three diode OR circuits 48, 49 and 50, respectively to the outputs 32, 31, 30; 30, 35, 34, and 34, 33 and 32 of the phase shifter 4.

The inverters 45, 46 and 47 are directly connected, at their outputs, to the gates of the HEXFETs 23, 24 and 25.

The optical coupling devices perform the task of supplying the gates of the HEXFETs with a positive auxiliary voltage which is sufficiently high with respect to the source as to allow biasing of the HEXFETs while keeping the final stage 1 de-coupled from the module 2.

The auxiliary voltage is supplied, as described above, by the stage 7, which is substantially a voltage source composed of an oscillator 51, for example of the 1-KHz type, which drives a power transistor 52 connected in series to the primary winding of a transformer 53.

The voltage on the secondary winding, appropriately rectified by the diode 54 and smoothed by the capacitor 55, is stabilized by an integrated circuit 56, for example of the 7812 type, and filtered from noise by a capacitor 57. The positive terminal of the auxiliary voltage is fed to the optical coupling devices 42, 43 and 44, whereas the negative terminal is connected to the points R, S and T through three respective diodes 58, 59 and 60.

The operation of the above described three-phase generator is illustrated hereafter, assuming that it has passed the transient startup step and is now in normal operating conditions.

In these conditions, as mentioned, voltage pulses with the same frequency as those at the output of the generator 5 (normally 50 Hz) appear in sequence at the outputs of the phase shifter 4, and precisely each output is fed with a pulse delayed and in advance of 60° with respect to the previous and subsequent output, respectively, so that the cycle repeats every 360°.

The pulse, for example at the output 30, is transmitted, through a respective diode 41 and the inverters 38, to the optical coupling device 44 and simultaneously, through respective diodes 48 and 49 and the inverters 45, 46, to the gates of the HEXFETs 23, 24.

The pulse on the optical coupling device 44 causes the activation thereof and therefore the auxiliary positive voltage, supplied by the stage 7, is fed to the gate of the HEXFET 22 which is thus biased and switches on.

The positive voltage of the battery thus reaches the point T. The voltage pulses sent to the gates of the HEXFETs 23, 24 simultaneously bias said HEXFETs, so that the points R and S are connected to the ground (negative voltage of the battery).

When the phase shifter 4 generates a pulse on the subsequent output 31, the optical coupling device 44 remains activated through the diodes 41 and the inverters 38, so that the HEXFET 22 remains biased and the positive voltage remains at the point T.

Simultaneously, the optical coupling device 43 is activated through a diode 40 and the inverters 37 and causes the HEXFET 21 to switch on, while the gate of the HEXFET 24 is no more fed, so that the positive voltage can be supplied to the point S through the HEXFET 21.

As regards the HEXFET 23, it should be noted that it remains biased, since the driving signal, previously fed by the output 30, is now fed by the output 31. Therefore a negative voltage ground is present at the point R.

Since the pulses at the output of the phase shifter are fed in sequence to the outputs 30-35 with a 60° phase shift at the frequency of 50 Hz, a cyclic switching of the HEXFETs 20-25 in the above described manner is achieved, and the voltage at the points R, S and T varies cyclically every 180°, so as to produce a square-wave three-phase voltage, as illustrated in figure 3, in which the outputs of the phase shifter 4 on which a pulse is present have been also indicated to point out the conduction times of the HEXFETs 20-25.

As mentioned above, the circuit 6 has the task of varying the frequency of the three-phase voltage during the transient period which precedes normal operation; in the illustrated example, said circuit 6 is intended to reduce the frequency of the generator 5 and ultimately of the three-phase voltage at the output of the final stage. This frequency reduction can be used to increase startup pickup when an electric motor is connected to the three-phase voltage.

The circuit 6 comprises a capacitor 61 which has one terminal connected to the positive terminal of the battery and the opposite terminal connected to the base of a transistor 63 through a pair of inverters 62. A capacitor 64 is connected to the emitter terminal of the transistor 63 and is connected to the input of the inverter 26 of the generator 5.

Assuming an electric motor is to be powered when the three-phase generator is connected to the battery, the transistor 63 starts conducting, so that the capacitor 64 is connected in parallel to the capacitor 27, lowering the frequency of the generator 5. As the capacitor 61 charges, the base to emitter voltage of the transistor 63 decreases until it switches off, disconnecting the capacitor 64 and therefore restoring the normal operating frequency of the generator 5.

As can be seen, the described generator perfectly achieves the proposed aim and object.

In particular, it is economical to manufacture and highly reliable in operation.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. A three-phase generator with direct-current supply, characterized by a generator (5) of pulses which have a frequency equal to the three-phase voltage to be generated, a pulse phase shifter (4) connected to said pulse generator and having a plurality , of outputs (30-35), said phase shifter (4) operating so that a cyclic phase shift of the signal occurs on the plurality of outputs (30-35) upon each input pulse, a final power stage (1) composed of controllable components (20-25) which has, for each phase, a pair of said components connected in series to the terminals of the direct-current power supply, the intermediate points of each pair constituting the output points (R, S,T) feeding the three-phase voltage, means (2, 3) for driving said power stage (1), said means being interposed between the latter and said phase shifter (4), said means being adapted to control said controllable components (20, 25) so as to connect the three-phase voltage output points (R, S, T) to the terminals of the power supply according to a cyclic behavior of the desired frequency.

2. A generator according to claim 1, characterized in that said final power stage (1) comprises, for each phase, a pair of HEXFETs (20, 25) connected in series between the terminals of the direct-current supply.

3. A generator according to claim 2, characterized in that said means (2, 3) for driving the power stage (1) comprise two modules constituted by inverters (36-38, 45-47) which are connected, on the input side, to the outputs of the phase shifter (4) through diodes (39-41, 48-50) and, on the output side, to the control gates of said HEXFETs, respective optical coupling devices (42-44) controlled by said phase shifter (4) being arranged between the HEXFETs (20-22) connected to the positive terminal of the supply and the related inverters (36-38) in order to feed an auxiliary voltage to the gates of said HEXFETs.

4. A generator according to claim 3, characterized in that a frequency varying circuit (6) with time-controlled disconnection is operatively associated with said pulse generator (5).

EP 0 385 352 A2

**FIG.3**

| ⊦30 ⊦ 31 ⊦ 32 ⊦33 ⊦ 34 ⊦ 35 ⊦ 30 ⊦ 31 ⊦ 32 ⊦ 33 ⊦34 ⊦ 35 ⊦ 30 ⊦ 31 ⊦ |

T          S          R          T          S          R          T          S

$\frac{\pi}{3}$   $\frac{2}{3}\pi$   $\pi$   $\frac{4}{3}\pi$   $\frac{5}{3}\pi$   $2\pi$          $3\pi$          $4\pi$          $5\pi$

**FIG.1**

```
         PROTEC-        FILTER       STABIL.        AUX.      7
         TION                                      VOLTAGE
  +      CIRCUIT
           8              9            10

   6
  FREQ.          OSC.          PULSE        DRIVER      2      POWER
  CONTROL         5           PHASE        MODULE             STAGE      1      R
                              SHIFTER                                           S
                                4          DRIVER                               T
                                           MODULE    3

         PROTECTION    11
         CIRCUIT
```

# FIG.2

EP 0 385 352 A2